# EUROPÄISCHE PATENTSCHRIFT

(11) **EP 4 330 084 B1**
(45) Veröffentlichungstag und Bekanntmachung des Hinweises auf die Patenterteilung: **20.08.2025**
(21) Anmeldenummer: 22719940.3
(22) Anmeldetag: 06.04.2022
(51) Int. Cl.: B60R 11/04, B60R 1/12

(54) **GERÄTETRÄGER FÜR EIN FAHRZEUG**
EQUIPMENT HOLDER FOR A VEHICLE
SUPPORT D'ÉQUIPEMENT POUR VÉHICULE

(30) Priorität: 30.04.2021 DE 102021111200
(43) Veröffentlichungstag der Anmeldung: 06.03.2024
(73) Patentinhaber: Bayerische Motoren Werke Aktiengesellschaft, 80809 München (DE)
(72) Erfinder: HOFFMANN, Philipp, 30539 Hannover (DE); SCHLUMPP, Florian, 80636 München (DE); KERSCHER, Alexander, 85229 Markt Indersdorf (DE)
(86) Internationale Anmeldenummer: PCT/EP2022/059124
(87) Internationale Veröffentlichungsnummer: WO 2022/228844

(56) Entgegenhaltungen:
- EP-A1- 3 248 842
- EP-A1- 3 632 745
- CN-A- 104 385 988
- DE-A1- 102008 008 656
- JP-A- 2018 107 518
- US-A1- 2020 099 865

## Beschreibung

Die Erfindung betrifft ein System, mit dem Kameras - und insbesondere Geräteträger, die mehrere Kameras umfassen - an Fahrzeugen anbringbar sind; insbesondere Geräteträger mit Kameras zur Ersetzung seitlicher Außenspiegel von Fahrzeugen.

Ein Kraftfahrzeug umfasst üblicherweise einen rechten und einen linken Außenspiegel, die derart an der rechten bzw. linken Seite des Fahrzeugs angebracht sind, dass sie im Blickfeld eines Fahrers liegen und diesem erlauben, einen seitlich hinter dem Kraftfahrzeug liegenden Bereich einzusehen. Aus aerodynamischen Gründen wurde versucht, einen Außenspiegel durch eine Kamera zu ersetzen, die einen seitlich hinter dem Kraftfahrzeug liegenden Bereich einsieht und eine Darstellung des abgetasteten Bildes im Innenraum des Kraftfahrzeugs ermöglicht.

DE 10 2012 004 793 A1 zeigt ein Kraftfahrzeug mit einem elektronischen Rückspiegel, der in Verbindung mit einer Anzeigevorrichtung eingesetzt wird, die als multitouchfähiger Touchscreen ausgebildet ist.

US 2020 / 099 865 A1 zeigt einen Geräteträger mit zwei Spiegeln zur Ersetzung eines Außenspiegels an einem Fahrzeug. Ein Zusammenhang mit Geräteträgern bzw. Außenspiegeln an unterschiedlichen Fahrzeugen, insbesondere an unterschiedlichen Fahrzeugtypen geht daraus nicht hervor.

EP 3 248 842 A1 zeigt einen Geräteträger zur Ersetzung eines Außenspiegels an einem Fahrzeug, wobei der Geräteträger um eine senkrechte Achse schwenkbar ist.

CN 104 385 988 A zeigt einen Geräteträger mit einer Kamera, die einen seitlich vor dem Fahrzeug liegenden Bereich erfassen kann.

DE 10 2008 008 656 A1 zeigt einen Geräteträger mit einer Reinigungseinrichtung.

EP 3 632 745 A1 zeigt einen Geräteträger mit einer Kamera mit verstellbarer Blickrichtung.

JP 2018 107518 A zeigt einen Innenaufbau eines Geräteträgers mit zwei Kameras.

Mit dem Konzept des elektronischen Rückspiegels verbundene Detailprobleme haben bisher eine flächendeckende Einführung verhindert.

Eine der vorliegenden Erfindung zu Grunde liegende Aufgabe besteht in der Angabe einer verbesserten Technik, um Kameras und/oder Geräteträger mit mehreren Kameras an Fahrzeugen unterschiedlicher Fahrzeugtypen anzubringen.

Die Erfindung löst diese Aufgabe mittels der Gegenstände der unabhängigen Ansprüche. Unteransprüche geben bevorzugte Ausführungsformen wieder.

Erfindungsgemäß umfasst das System
- eine erste Befestigungsplatte zur Anbringung an einem Fahrzeug eines zugeordneten ersten Fahrzeugtyps;
- eine zweite Befestigungsplatte zur Anbringung an einem Fahrzeug eines zugeordneten zweiten Fahrzeugtyps,
- wobei die Befestigungsplatten jeweils zur Anbringung an einer rechten oder an einer linken Außenseite des Fahrzeugs eingerichtet sind;
- eine Halteplatte mit einer ersten und einer zweiten Kamera; und
- ein Gehäuse zur Anbringung an einer der Befestigungsplatten derart, dass die erste Kamera einen seitlich hinter dem Fahrzeug liegenden Bereich und die zweite Kamera einen seitlich des Fahrzeugs liegenden Bereich einsehen kann.

Vorzugsweise umfasst ein Geräteträger für ein Fahrzeug die erste Kamera; die zweite Kamera; und das Gehäuse zur Aufnahme der Kameras. Dabei ist das Gehäuse dazu eingerichtet, an einer rechten oder linken Außenseite des Fahrzeugs angebracht zu werden, sodass die erste Kamera einen seitlich hinter dem Fahrzeug liegenden Bereich und die zweite Kamera einen seitlich des Fahrzeugs liegenden Bereich einsehen kann.

Der Geräteträger kann verbessert mehrere Funktionen ausfüllen, die eine Abtastung eines Umfelds des Fahrzeugs erfordern. In einer Ausführungsform kann der Geräteträger als Sensorinsel oder Sensorpylon ausgeführt werden, in dem eine Vielzahl Sensoren miteinander integriert sind. So können etwa auch eine oder mehrere weitere Kameras im Geräteträger angeordnet werden. Probleme bei der Anordnung der Sensoren am Fahrzeug, beispielsweise aus aerodynamischen Gründen oder wegen der optischen Beeinflussung des Fahrzeugs, können einmalig adressiert und gelöst werden. Es wurde erkannt, dass ein Geräteträger, der insbesondere dazu eingerichtet ist, eine Rückspiegelfunktionalität zu erfüllen, vorteilhaft mit anderen Sensoren integriert werden kann.

Der seitlich hinter dem Fahrzeug liegende Bereich, der mittels der ersten Kamera eingesehen werden kann, kann einem Bereich entsprechen, der mit einem klassischen Außenspiegel eingesehen werden kann. Die erste Kamera kann beispielsweise ein Sichtfeld mit einem horizontalen Öffnungswinkel im Bereich von ca. 40° bis ca. 60°, in einer Ausführungsform von ca. 51°, und einem vertikalen Öffnungswinkel im Bereich von ca. 40° bis 50°, in einer Ausführungsform von ca. 43°, aufweisen. Die Auflösung der ersten Kamera kann wenigstens 20 Pixel pro Grad (px/°), bevorzugt wenigstens 40 px/° betragen.

Die zweite Kamera kann Teil eines Umfeld-Überwachungssystems sein. Sie hat üblicherweise eine Optik, die eine kürzere Brennweite und ein größeres Sichtfeld als die erste Kamera ermöglicht. Ein horizontaler Öffnungswinkel kann ca. 190° oder mehr betragen, ein vertikaler Öffnungswinkel ca. 155°. Die Auflösung der zweiten Kamera liegt bevorzugt bei wenigstens ca. 7 px/°. Dabei ist eine maximale Entfernung des eingesehenen Bereichs üblicherweise geringer als für die erste Kamera.

Das Umfeld-Überwachungssystem kann noch mit weiteren Kameras kombiniert werden, die insbesondere vorne oder hinten am Fahrzeug angebracht sein können. Beispielsweise können nach vorne weisende weitere Kameras im Bereich eines Kühlergrills oder einer oberen Begrenzung einer Frontscheibe vorgesehen sein; nach hinten weisende Kameras können etwa im Bereich eines Rücklichts, eines Kennzeichens oder einer oberen Dachkante angebracht sein.

Das Gehäuse ist bevorzugt dazu eingerichtet, die erste Kamera seitlich so weit vom Fahrzeug zu beabstanden, dass die erste Kamera eine breiteste hinter dem Geräteträger liegende Stelle des Fahrzeugs einsehen kann. Das Fahrzeug umfasst bevorzugt ein Kraftfahrzeug, insbesondere ein Kraftrad, einen Personenkraftwagen, einen Lastkraftwagen oder einen Bus. Die breiteste Stelle kann insbesondere im Bereich eines hinteren Radlaufs liegen. Um diese Stelle zuverlässig einsehen zu können, kann das Gehäuse einen Ausleger umfassen, um die Kameras in seitlicher Richtung von einem Umriss des Fahrzeugs zu entfernen. Das Gehäuse kann auf diese Weise aerodynamisch gestaltet sein und Geräusche, die durch Fahrtwind hervorgerufen werden, können reduziert sein. In einer anderen Ausführungsform kann das Gehäuse nahe am Fahrzeug liegen und insbesondere fließend in dieses übergehen. In einer Ausführungsform ähnelt ein auf der Außenseite des Fahrzeugs sichtbarer Teil des Gehäuses einem Abschnitt eines Rotationsellipsoids.

In einer bevorzugten Ausführungsform umfasst das System bzw. dessen Geräteträger darüber hinaus eine dritte Kamera, die derart im Gehäuse aufgenommen ist, dass sie einen seitlich vor dem Fahrzeug liegenden Bereich einsehen kann. Die dritte Kamera kann insbesondere Teil eines Systems zur Bewegungssteuerung des Fahrzeugs umfassen. Das System kann dazu eingerichtet sein, das Fahrzeug teilweise oder vollständig autonom in Längsrichtung und/oder Querrichtung zu steuern. Durch Platzierung der dritten Kamera des Systems im Geräteträger kann ein für die Steuerung des Fahrzeugs relevanter Bereich verbessert abgetastet werden.

Das System bzw. dessen Geräteträger kann ferner eine Signalleuchte umfassen. Die Signalleuchte kann insbesondere einen Fahrtrichtungsanzeiger umfassen. Die Signalleuchte kann von einem vorbestimmten Bereich oder einer vorbestimmten Position bezüglich des Fahrzeugs eingesehen werden. Beispielsweise kann die Signalleuchte von seitlich des Fahrzeugs, von seitlich hinten und/oder seitlich vorne erkennbar sein. Die Signalleuchte kann dazu beitragen, eine Sicherheit des Fahrzeugs oder anderer Verkehrsteilnehmer im Bereich des Fahrzeugs zu steigern.

In einer weiteren Ausführungsform umfasst das System bzw. der Geräteträger eine Beleuchtungseinrichtung. In einer ersten Variante umfasst die Beleuchtungseinrichtung ein Positionslicht, um einen äußeren Umriss des Fahrzeugs zu kennzeichnen. Ein von vorne sichtbares Positionslicht kann weißes Licht, ein nach hinten weisendes rotes Licht aussenden. In einer zweiten Variante umfasst die Beleuchtungseinrichtung eine Umfeldbeleuchtung, um einer Person das Ein- oder Aussteigen aus dem Fahrzeug zu erleichtern. Dabei kann die Umfeldbeleuchtung einen Projektor umfassen, um ein vorbestimmtes Bild auf einen Untergrund zu projizieren, beispielsweise ein Markenlogo, das auf einen Hersteller des Fahrzeugs hinweist.

In einer weiteren Ausführungsform umfasst das System bzw. der Geräteträger eine Reinigungseinrichtung für eine der Kameras. Eine Kamera umfasst üblicherweise ein Objektiv oder ein ähnliches optisches Element, das im Bereich eines Durchbruchs oder einer Aussparung des Gehäuses derart angebracht ist, dass die Kamera im Gehäuse aufgenommen ist und durch das optische Element den der Kamera zugeordneten Bereich einsehen kann. Die Reinigungseinrichtung ist bevorzugt dazu eingerichtet, eine Außenseite des optischen Elements zu reinigen. Dazu kann eine Fluidreinigung eingesetzt werden, die beispielsweise mit einer Flüssigkeit oder Druckluft arbeitet. Es kann auch eine Reinigungseinrichtung vorgesehen sein, die auf die Oberfläche des optischen Elements aufgebracht oder dieser vorgelagert ist. In diesem Fall kann die Reinigungseinrichtung eine oder mehrere transparente Schichten umfassen, von denen die äußerste wasserabweisend ist. Zwei Schichten können derart mit einer elektrischen Spannung versorgt werden, dass ein auf dem optischen Element abgelagerter Wassertropfen in einer vorbestimmten Reinigung transportiert wird.

Das System bzw. der Geräteträger kann darüber hinaus einen Sensor für eine Umgebungshelligkeit aufweisen. Der Sensor kann insbesondere dazu eingerichtet sein, eine Sonneneinstrahlung zu bestimmen. Dabei ist der Sensor üblicherweise nicht bildgebend und kann, anders als üblicherweise die Kameras, eher nach oben orientiert sein. Durch Bestimmung von Umgebungshelligkeiten auf der rechten und der linken Seite des Fahrzeugs kann eine verbesserte Steuerung einer Klimatisierung (HVAC: Heating, Ventilation, Air Conditioning) eines Innenraums des Fahrzeugs möglich sein.

In noch einer weiteren Ausführungsform umfasst das System bzw. der Geräteträger einen Temperatursensor. Der Temperatursensor ist dazu eingerichtet, eine Temperatur im Umfeld des Fahrzeugs, insbesondere eine Lufttemperatur, zu bestimmen. Die Temperatur kann zur Steuerung eines HVAC-Systems berücksichtigt werden.

Der Geräteträger kann derart am Fahrzeug angebracht sein, dass er im Fall einer Kollision mit einem Objekt oder einer Person in kontrollierter Weise vom Fahrzeug abgetrennt wird. Dazu kann der Geräteträger eine Sollbruchstelle oder eine Schnappverbindung aufweisen. Sensoren, die im Gehäuse aufgenommen sind, können mittels Kabeln mit dem Fahrzeug verbunden sein, wobei ein Kabel als Fangleine für einen abgetrennten Geräteträger dienen kann. Ein Kabel kann auch einen Reißpunkt aufweisen, der als Sollbruchstelle des Kabels arbeiten kann. Eines oder mehrere Kabel der Sensoren kann mittels eines Steckverbinders mit dem Fahrzeug verbunden sein. Der Steckverbinder kann dazu eingerichtet sein, sich bei Überschreiten einer vorbestimmten Zugbelastung selbsttätig zu lösen.

Es ist besonders bevorzugt, dass der Geräteträger dazu eingerichtet ist, in einem Bereich des Fahrzeugs angebracht zu werden, der sich hinter und oberhalb einer Achse eines Vorderrads des Fahrzeugs erstreckt. Für die Bestimmung der Drehachse wird von einer Neutralstellung des Vorderrads ausgegangen. Eine Aerodynamik des Fahrzeugs kann dadurch weniger beeinflusst werden. Es ist weiter bevorzugt, dass die Kamera nicht hinter der Längsposition einer Spritzwand, einer A-Säule des Fahrzeugs und/oder einer vorderen Kante einer vorderen Seitentür angebracht ist. Um den Geräteträger verbessert vor Straßenschmutz zu schützen ist weiter bevorzugt, dass er in einer Höhe am Fahrzeug angebracht ist, an der eine Normale auf die Fahrzeugkarosserie über die Horizontale weist. Diese Höhe liegt bevorzugt über einer breitesten Stelle des Fahrzeugs in diesem Bereich. Die bevorzugte Höhe kann an einem üblichen Fahrzeug bei ca. 80 bis 120 cm liegen. In einer besonders bevorzugten Ausführungsform ist der Geräteträger in einer Höhe von ca. 100 cm am Fahrzeug angebracht. Dabei ist der Geräteträger bevorzugt seitlich orientiert.

In unterschiedlichen Ausführungsformen kann der Geräteträger in einer seitlichen Mulde des Fahrzeugs liegen, an Fahrzeug anliegen oder mittels eines Auslegers oder einer Strebe vom Fahrzeug beabstandet sein. Üblicherweise muss der Geräteträger um so weiter vom Fahrzeug beabstandet werden, je weiter hinten er angebracht ist, um Vorgaben zur Einsehbarkeit von vorbestimmten Bereichen am Fahrzeug zu erfüllen. In einer Ausführungsform kann der Geräteträger im Bereich eines vorderen Kotflügels angeordnet sein. Der Geräteträger kann in einem Bereich angeordnet sein, an dem konventionellerweise ein Außenspiegel angebracht ist. Dieser Bereich ist meistens ungefähr dreiecksförmig und wird auch Spiegeldreieck genannt.

Es ist besonders bevorzugt, dass der Geräteträger des erfindungsgemäßen Systems dazu eingerichtet ist, an Fahrzeugen verschiedener Fahrzeugtypen angebracht zu werden. Ein Entwicklungsaufwand für die Bestückung des Gerätesensors mit Kameras sowie gegebenenfalls weiterer Sensoren kann einmalig betrieben und an verschiedenen Fahrzeugtypen ausgenutzt werden. Dadurch können Entwicklungs- und Produktionskosten für den Geräteträger sowie eines der Fahrzeuge verringert werden.

Der Geräteträger kann eine Halteplatte zur Anbringung der ersten und der zweiten Kamera, und eine Befestigungsplatte zur Anbringung am Fahrzeug aufweisen. Dabei sind die Halteplatte und das Gehäuse an der Befestigungsplatte angebracht. Optionale weitere Sensoren können ebenfalls an der Halteplatte angebracht sein. Die Befestigungsplatte kann spezifisch an einen vorbestimmten Fahrzeugtyp angepasst sein, sodass durch Auswechseln der Befestigungsplatte der Geräteträger an einem anderen Fahrzeugtyp befestigt werden kann. Das Gehäuse kann ebenfalls auswechselbar sein, wobei das Gehäuse ebenfalls einem vorbestimmten Fahrzeugtyp zugeordnet sein kann. So kann der Geräteträger nach Art eines modularen Systems zum Einsatz an verschiedenen Fahrzeugtypen konfiguriert werden. Die Halteplatte kann in Abhängigkeit einer geplanten Ausstattung des Fahrzeugs flexibel mit Sensoren bestückt werden.

Nach einem weiteren Aspekt der vorliegenden Erfindung umfasst ein Fahrzeug einen von dem hierin beschriebenen System umfassten Geräteträger. Bevorzugt umfasst das Fahrzeug wenigstens zwei Geräteträger, von denen einer auf einer rechten und der andere auf einer linken Fahrzeugseite angebracht ist. Ferner kann das Fahrzeug über ein Verarbeitungssystem verfügen, das dazu eingerichtet ist, Signale, die von Sensoren des Geräteträgers bereitgestellt werden, zu verarbeiten. Das Fahrzeug kann auch eine Anzeigevorrichtung aufweisen, die dazu eingerichtet ist, Bilder darzustellen, die auf der Basis von Abtastungen eines Umfelds des Fahrzeugs mittels einer der Kameras bereitgestellt sein können.

Wie bereits weiter oben erwähnt, umfasst das System eine erste Befestigungsplatte zur Anbringung an einem Fahrzeug eines zugeordneten ersten Fahrzeugtyps; eine zweite Befestigungsplatte zur Anbringung an einem Fahrzeug eines zugeordneten zweiten Fahrzeugtyps, wobei die Befestigungsplatten jeweils zur Anbringung an einer rechten oder an einer linken Außenseite des Fahrzeugs eingerichtet sind; eine Halteplatte mit einer ersten und einer zweiten Kamera; und ein Gehäuse zur Anbringung an einer der Befestigungsplatten derart, dass die erste Kamera einen seitlich hinter dem Fahrzeug liegenden Bereich und die zweite Kamera einen seitlich des Fahrzeugs liegenden Bereich einsehen kann.

Die Fahrzeugtypen sind dabei bevorzugt voneinander unterschiedlich. Das System kann nach Art eines Baukastens zur Bereitstellung eines passenden Geräteträgers für ein Fahrzeug eingesetzt werden.

Im System können ein erstes Gehäuse zur Anbringung an der ersten Halteplatte und ein zweites Gehäuse zur Anbringung an der zweiten Halteplatte vorgesehen sein. Auf diese Weise können die Gehäuse jeweils einem Fahrzeugtyp zugeordnet sein. Anforderungen beispielsweise bezüglich einer Gestaltung, einer aerodynamischen Ausprägung oder einer Gehäusefarbe können so verbessert mit Bezug auf das jeweilige Fahrzeug erfüllt werden. Die Halteplatte und die Kameras sowie gegebenenfalls weitere Sensoren können universell vorgesehen sein. Die Halteplatte kann zur Anbringung unterschiedlicher Sensoren, insbesondere unterschiedlicher Kameras vorbereitet sein. Dazu kann die Halteplatte über entsprechende Befestigungspunkte oder Aussparungen verfügen, an denen die Kameras befestigt werden können.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Die Erfindung wird nun mit Bezug auf die beigefügten Zeichnungen genauer beschrieben, in denen:
- Figur 1: einen Geräteträger an einem Fahrzeug;
- Figur 2: ein System mit Komponenten eines Geräteträgers; und
- Figuren 3 bis 5: Ausführungsformen eines Geräteträgers an einem Fahrzeug;
- Figuren 6 und 7: Ansichten einer weiteren Ausführungsform eines Geräteträgers an einem Fahrzeug;
- Figuren 8 bis 10: Ansichten noch einer weiteren Ausführungsform eines Geräteträgers zur Anbringung an einem Fahrzeug
illustrieren.

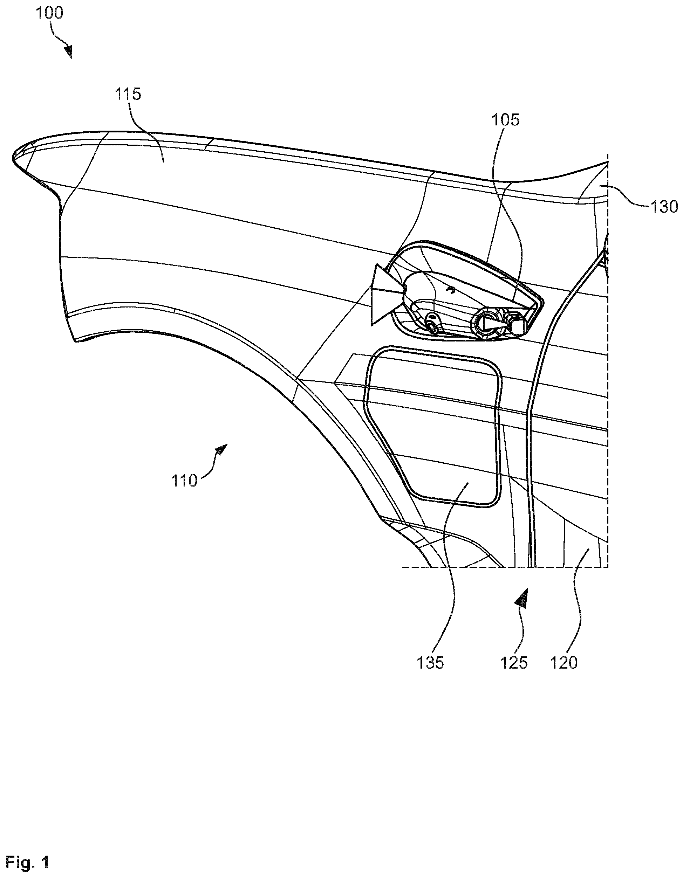

Figur 1 zeigt ein beispielhaftes Fahrzeug 100 mit einem Geräteträger 105. Vom Fahrzeug 100 ist ein linker vorderer Bereich dargestellt. Über einem Radkasten 110 erstreckt sich ein vorderer Kotflügel 115 in Richtung einer Motorhaube (nicht dargestellt). Nach hinten wird der Kotflügel 115 begrenzt durch eine Seitentür 120, die im Bereich einer Spritzwand 125 am Fahrzeug 100 angeschlagen ist. Oberhalb der Spritzwand 125 geht der Kotflügel 115 in eine Fahrzeugsäule 130 über, die auch A-Säule genannt werden kann.

Bezüglich einer Drehachse eines Vorderrads, das im vorderen Radkasten 110 aufgenommen ist, befindet sich der Geräteträger 105 bevorzugt weiter hinten und weiter oben. Der Geräteträger 105 ist an einer Außenseite des Fahrzeugs 100 in seitlicher Richtung angebracht. In der dargestellten Ausführungsform befindet er sich oberhalb einer Zugriffsklappe 135, hinter der sich ein elektrischer Anschluss zum Laden eines elektrischen Energiespeichers des Fahrzeugs 100 befinden kann.

Symbolisiert durch einen sich in Fahrtrichtung des Fahrzeugs 100 öffnenden Kegel ist ein Abtastbereich einer Kamera im Geräteträger 105 angedeutet. Ein sich nach oben erweiternder Kegel symbolisiert einen Erfassungsbereich eines beispielhaften Lichtsensors. Ein weiter hinten zu erkennender Kegel, der sich entgegen der Fahrtrichtung öffnet, symbolisiert einen Fluidstrahl einer Reinigungseinrichtung für ein optisches Element im Geräteträger 105.

Es wird vorgeschlagen, dass der Geräteträger 105 dazu eingerichtet ist, mit einer Vielzahl Sensoren ausgerüstet zu werden, die jeweils dazu eingerichtet sind, einen vorbestimmten Aspekt eines Umfelds des Fahrzeugs 100 abzutasten. Außerdem wird vorgeschlagen, den Geräteträger 105 modular aufzubauen, sodass er an unterschiedlichen Fahrzeugtypen von Fahrzeugen 100 eingesetzt werden kann.

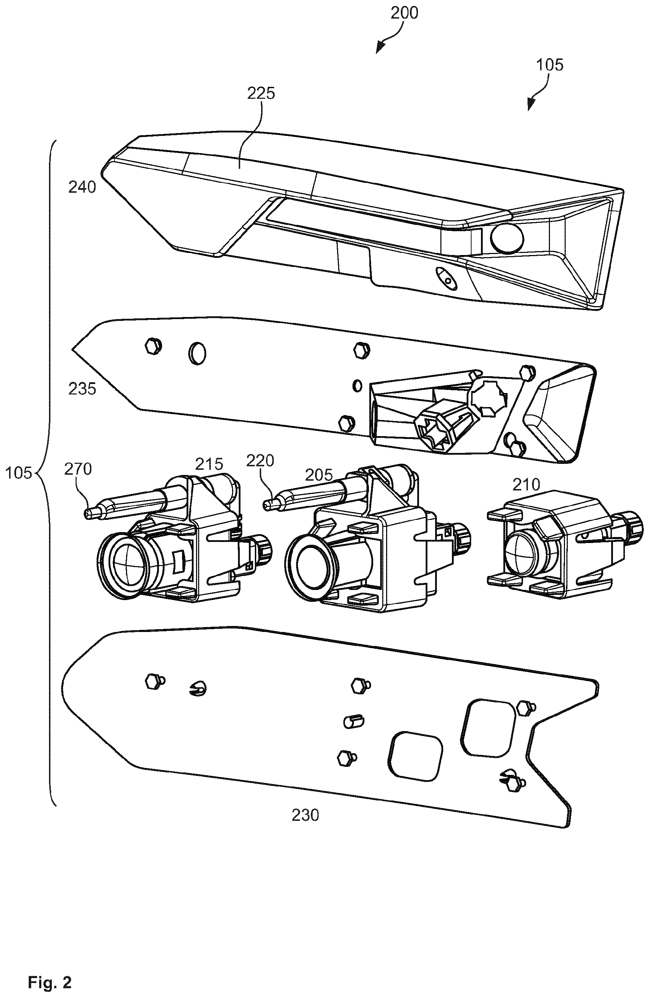

Figur 2 zeigt ein System 200 zur Bereitstellung eines Geräteträgers 105. In der dargestellten Ausführungsform umfasst der Geräteträger 105 eine erste Kamera 205, eine zweite Kamera 210 und eine optionale dritte Kamera 215. Die erste Kamera 205 ist dazu eingerichtet, einen vorbestimmten Bereich, der seitlich hinter dem Fahrzeug 100 liegt, abzutasten, und die zweite Kamera 210 ist dazu eingerichtet, einen vorbestimmten Bereich abzutasten, der seitlich des Fahrzeugs 100 liegt. Die dritte Kamera 215 ist bevorzugt dazu eingerichtet, einen vorbestimmten Bereich abzutasten, der sich seitlich vor dem Fahrzeug 100 erstreckt. Beispielhaft sind Reinigungseinrichtungen 220 für optische Elemente der ersten Kamera 205 und der zweiten Kamera 210 vorgesehen.

Der Geräteträger 105 kann noch weitere Sensoren oder Aktoren aufnehmen. In der dargestellten Ausführungsform ist beispielsweise eine Signalleuchte 225 vorgesehen, die insbesondere als Fahrtrichtungsanzeiger dienen kann. Andere mögliche Aktoren umfassen ein Positionslicht oder eine Umfeldbeleuchtung. Beispielhafte zusätzliche Sensoren umfassen einen Lichtsensor, ein Mikrofon und einen Temperatursensor.

Das System 200 umfasst eine Befestigungsplatte 230 zur Anbringung an einer rechten oder linken Außenseite eines Fahrzeugs 100 eines vorbestimmten Fahrzeugtyps, eine Halteplatte 235, an welcher die Kameras 205 bis 215 sowie optional weitere Sensoren oder Aktoren angebracht werden können, und ein Gehäuse 240.

Es wird vorgeschlagen, verschiedene Befestigungsplatten 230 vorzusehen, die jeweils einem vorbestimmten Fahrzeugtyp zugeordnet sind, sodass der Geräteträger 105 zur Anbringung an einem Fahrzeug 100 eines vorbestimmten Fahrzeugtyps konfektioniert werden kann. Bevorzugt sind auch unterschiedliche Gehäuse 240 vorgesehen, die entweder dem Fahrzeugtyp oder der Befestigungsplatte 230 zugeordnet sein können. Dabei bestimmt das Gehäuse 240 eine äußere Erscheinung des Geräteträgers 105 und kann mit dafür sorgen, dass sich der Geräteträger 105 in ein Gesamtbild des Fahrzeugs 100 einfügt und sicher an diesem befestigt ist. Die Halteplatte 235 kann ebenfalls nach dem Baukastenprinzip mit unterschiedlichen Kameras 205 bis 215 sowie weiteren Sensoren und/oder Aktoren ausgestattet werden, um an einem vorbestimmten Fahrzeug 100 eingesetzt zu werden. Die Halteplatte 235 mit daran angebrachten Elementen 205 bis 220 kann als separat handhabbare Einheit leicht montiert oder gewartet werden. In einer Ausführungsform kann eine Anordnung aus der Halteplatte 235 mit daran befestigten Sensoren und/oder Aktoren in unveränderter Form an Fahrzeugen 100 verschiedener Fahrzeugtypen eingesetzt werden, indem es mit einer passenden Befestigungsplatte 230 und/oder einem passenden Gehäuse 240 kombiniert wird.

Zur Anbringung des Geräteträgers 105 an einem Fahrzeug 100 kann zunächst die Befestigungsplatte 230 am Fahrzeug 100 befestigt werden, insbesondere an einer Innenseite des Fahrzeugs 100. Zur Fixierung können Rastelemente (Clips) verwendet werden, die entweder seitens der Befestigungsplatte 230 oder seitens des Fahrzeugs 100 bereits vormontiert sein können. Die Halteplatte 235 mit den Sensoren und/oder Aktoren 205 bis 220 kann dann von außen am Fahrzeug 100 angebracht und mit der Befestigungsplatte 230 verbunden werden, insbesondere mittels Verschraubens. Anschließend kann das Gehäuse 240 auf der Außenseite des Fahrzeugs 100 angebracht werden. Anschlüsse von Sensoren und/oder Aktoren 205 bis 220 können dann mit entsprechenden Systemen an Bord des Fahrzeugs 100 verbunden werden. Diese Anschlüsse können insbesondere vom Radhaus 110 aus zugänglich sein.

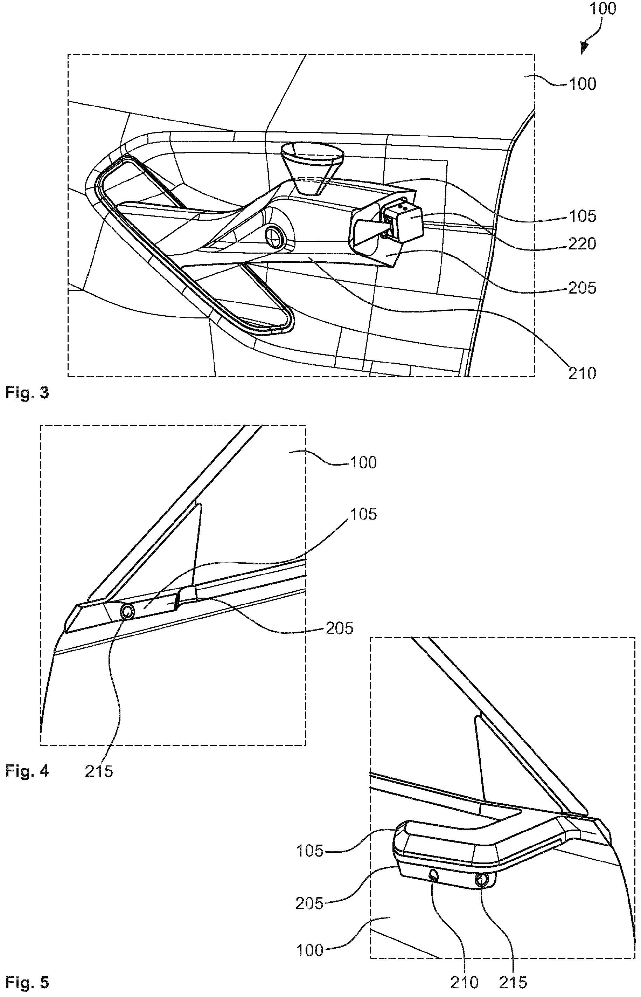

Figuren 3 bis 5 zeigen weitere Ausführungsformen eines Geräteträgers 105 an einem Fahrzeug 100. Die in Figur 3 dargestellte Ausführungsform des Geräteträgers 105 schmiegt sich in eine seitliche Vertiefung in der Außenhaut des Fahrzeugs 100. Dabei ist der Geräteträger 105 im Wesentlichen T-förmig, und weist einen entgegen der Fahrtrichtung des Fahrzeugs 100 gerichteten Endabschnitt auf, an dem die erste Kamera 205 angebracht ist, um einen Bereich hinter dem Fahrzeug 100 einzusehen. Optional ist eine Reinigungseinrichtung 220 in diesem Bereich vorgesehen. Die zweite Kamera 210 ist zur Seite und leicht nach unten orientiert. Ein sich nach oben öffnender Kegel in Figur 3 symbolisiert den Öffnungsbereich eines optionalen Lichtsensors.

Mit Bezug auf Figur 4 ist der dargestellte Geräteträger 105 eng am Fahrzeug 100 angebracht. Vorliegend ist der Geräteträger 105 nahe der A-Säule 130 an der Seitentür 120 angebracht. Dabei hat der Geräteträger 105 im Wesentlichen die Form eines Tubus, der sich entlang der Fahrtrichtung des Fahrzeugs 100 erstreckt. In einem vorderen Bereich ist die dritte Kamera 215 und in einem hinteren Bereich die erste Kamera 205 angebracht.

Figur 5 zeigt eine weitere Ausführungsform eines Geräteträgers 105, der an einer ähnlichen Stelle am Fahrzeug 100 angebracht ist wie die Ausführungsform von Figur 4. Hier umfasst der Geräteträger 105 jedoch einen Ausleger, sodass die Kameras 205, 210, 215 bezüglich einer Längsachse des Fahrzeugs 100 weiter außen liegen können. Die Kameras 205 bis 215 sind entlang einer Fahrtrichtung des Fahrzeugs 100 versetzt angeordnet.

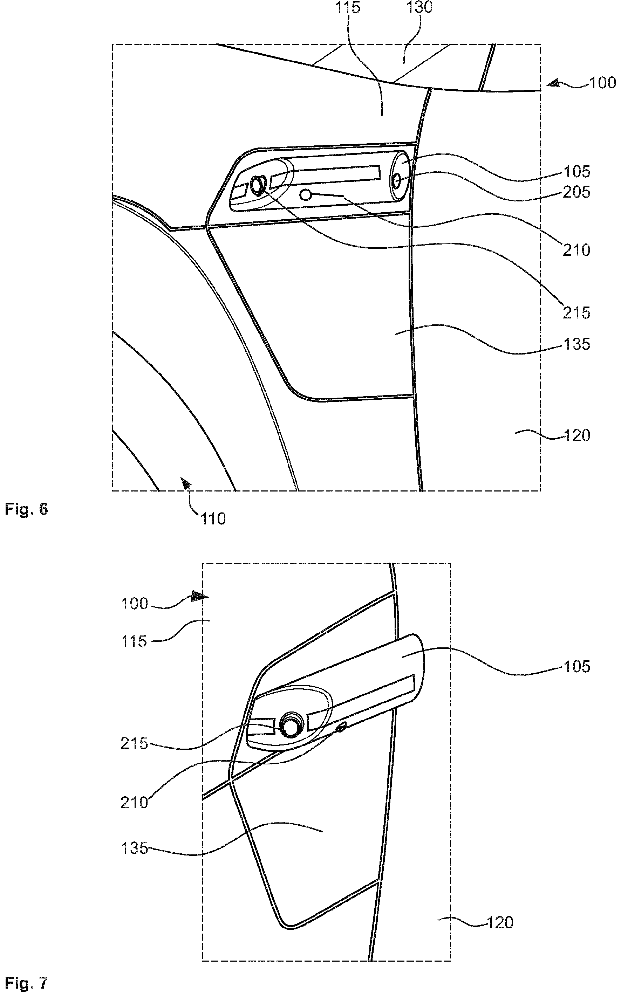

Figuren 6 und 7 zeigen noch eine weitere Ausführungsform eines Geräteträgers 105 an einem Fahrzeug 100. Figur 6 zeigt eine seitliche Ansicht, Figur 7 eine teilweise Vorderansicht. Ähnlich wie in der Ausführungsform von Figur 4 ist der Geräteträger 105 im Wesentlichen zylindrisch und entlang einer Fahrtrichtung des Fahrzeugs 100 orientiert. Dabei ist der Geräteträger 105 an einer ähnlichen Stelle angebracht wie in der Ausführungsform von Figur 1. Der dargestellte Geräteträger 105 ist im Wesentlichen zylindrisch, wobei nach vorne und nach hinten weisende Enden jeweils abgeschrägt sein können. Der Zylinder kann an einer Außenhaut des Fahrzeugs 100 anliegen oder in einem vorbestimmten Abstand von ihm abstehen. In der dargestellten Ausführungsform steht der Geräteträger 105 leicht winklig von einer Seitenfläche des Fahrzeugs 100 ab.

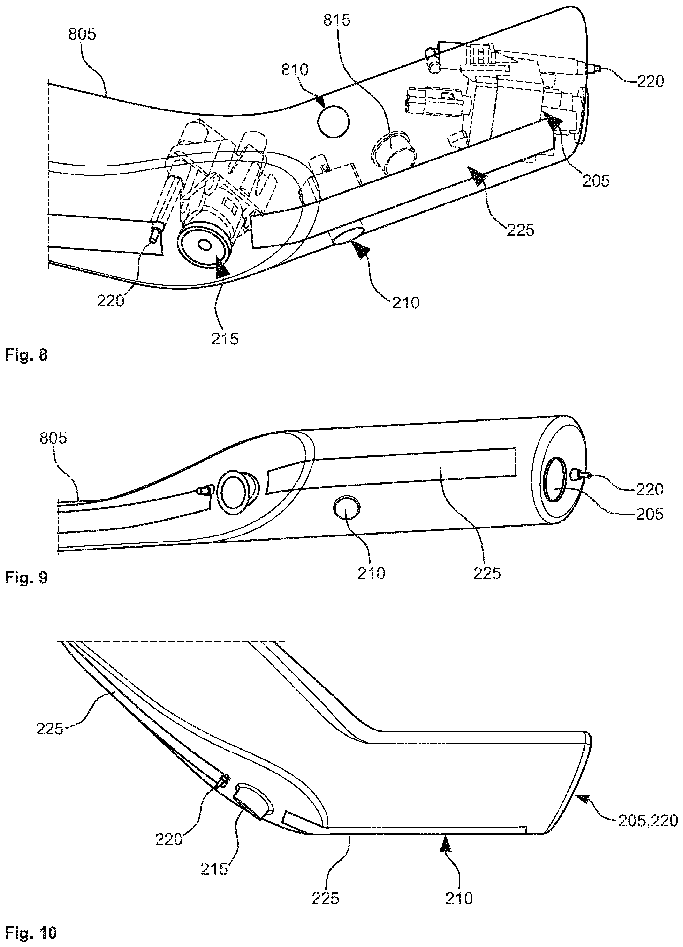

Figuren 8 bis 10 zeigen Ansichten noch einer weiteren Ausführungsform eines Geräteträgers 105 zur Anbringung an einem Fahrzeug 100. Figur 8 zeigt den Geräteträger 105 in einer teilweise transparenten Darstellung, Figur 9 von einer seitlichen Ansicht und Figur 10 in einer Draufsicht. Die dargestellte Ausführungsform ähnelt jener der Figuren 6 und 7, weist jedoch bevorzugt einen Ausleger 805 auf, um einen zylindrischen Abschnitt, in welchem die Kameras 205 und 210 sowie gegebenenfalls noch weitere Sensoren und/oder Aktoren aufgenommen sind, quer zur Fahrtrichtung weiter vom Fahrzeug 100 zu entfernen. Exemplarisch sind in dieser Ausführungsform zusätzlich ein Lichtsensor 810 und ein Mikrofon 815 vorgesehen.

### Bezugszeichen

- 100: Fahrzeug
- 105: Geräteträger
- 110: Radkasten
- 115: vorderer Kotflügel
- 120: Seitentür
- 125: Spritzwand
- 130: Fahrzeugsäule
- 135: Zugriffsklappe

- 200: System
- 205: erste Kamera
- 210: zweite Kamera
- 215: dritte Kamera
- 220: Reinigungseinrichtung
- 225: Signalleuchte (Blinker)
- 230: Befestigungsplatte
- 235: Halteplatte
- 240: Gehäuse

- 805: Ausleger
- 810: Lichtsensor
- 815: Mikrofon

## Patentansprüche

1. System (200), umfassend:
- eine erste Befestigungsplatte (230) zur Anbringung an einem Fahrzeug (100) eines zugeordneten ersten Fahrzeugtyps;
- eine zweite Befestigungsplatte (230) zur Anbringung an einem Fahrzeug (100) eines zugeordneten zweiten Fahrzeugtyps;
- wobei die Befestigungsplatten (230) jeweils zur Anbringung an einer rechten oder an einer linken Außenseite des Fahrzeugs (100) eingerichtet sind;
- eine Halteplatte (235) mit einer ersten Kamera (205) und einer zweiten Kamera (210); und
- ein Gehäuse (240) zur Anbringung an einer der Befestigungsplatten (230) derart, dass die erste Kamera (205) einen seitlich hinter dem Fahrzeug (100) liegenden Bereich und die zweite Kamera (210) einen seitlich des Fahrzeugs (100) liegenden Bereich einsehen kann.

2. System (200) nach Anspruch 1, umfassend einen Geräteträger (105) für ein Fahrzeug (100), wobei der Geräteträger (105)
- die erste Kamera (205),
- die zweite Kamera (210) und
- das Gehäuse (240) zur Aufnahme der ersten Kamera (205) und der zweiten Kamera (210)
umfasst, wobei das Gehäuse (240) dazu eingerichtet ist, an einer rechten oder linken Außenseite eines Fahrzeugs (100) angebracht zu werden.

3. System (200) nach Anspruch 1 oder 2, wobei das Gehäuse (240) dazu eingerichtet ist, die erste Kamera (205) seitlich so weit vom Fahrzeug (100) zu beabstanden, dass die erste Kamera (205) eine breiteste hinter dem Geräteträger (105) liegende Stelle des Fahrzeugs (100) einsehen kann.

4. System (200) nach einem der vorangehenden Ansprüche, ferner umfassend
- eine dritte Kamera (215), die derart im Gehäuse (240) aufgenommen ist, dass sie einen seitlich vor dem Fahrzeug (100) liegenden Bereich einsehen kann.

5. System (200) nach einem der vorangehenden Ansprüche, ferner umfassend
- eine Signalleuchte (225),
- eine Beleuchtungseinrichtung,
- eine Reinigungseinrichtung (220) für eine der Kameras (205, 210, 215),
- einen Temperatursensor und/oder
- einen Lichtsensor (810) und/oder einen Sensor für eine Umgebungshelligkeit.

6. System (200) nach einem der vorangehenden Ansprüche, wobei der Geräteträger (105) dazu eingerichtet ist, in einem Bereich des Fahrzeugs (100) angebracht zu werden, der sich hinter und oberhalb einer Achse eines Vorderrads und vor einer Spritzwand (125) des Fahrzeugs (100) erstreckt.

7. System (200) nach einem der vorangehenden Ansprüche, wobei der Geräteträger (105) dazu eingerichtet ist, an Fahrzeugen (100) verschiedener Fahrzeugtypen angebracht zu werden.

8. System (200) nach Anspruch 7, wobei die Halteplatte (235) und das Gehäuse (240) an einer der Befestigungsplatten (230) angebracht sind.

9. System (200) nach einem der vorangehenden Ansprüche, wobei ein erstes Gehäuse (240) zur Anbringung an einer ersten Halteplatte (235) und ein zweites Gehäuse (240) zur Anbringung an einer zweiten Halteplatte (235) vorgesehen sind.

10. Fahrzeug (100), umfassend ein System (200) mit einem Geräteträger (105) nach einem der vorangehenden Ansprüche.

## Claims

1. System (200) comprising:
- a first fastening plate (230) for attachment to a vehicle (100) of an assigned first vehicle type;
- a second fastening plate (230) for attachment to a vehicle (100) of an assigned second vehicle type;
- wherein the fastening plates (230) are respectively configured to be attached to a right or to a left outer side of the vehicle (100);
- a mounting plate (235) having a first camera (205) and a second camera (210); and
- a housing (240) for attachment to one of the fastening plates (230) such that the first camera (205) can see a region located laterally behind the vehicle (100) and the second camera (210) can see a region located laterally of the vehicle (100).

2. System (200) according to Claim 1, comprising an equipment holder (105) for a vehicle (100), wherein the equipment holder (105) comprises
- the first camera (205),
- the second camera (210) and
- the housing (240) for accommodating the first camera (205) and the second camera (210),
wherein the housing (240) is configured to be attached to a right or left outer side of a vehicle (100).

3. System (200) according to Claim 1 or 2, wherein the housing (240) is configured to space apart the first camera (205) laterally from the vehicle (100) far enough that the first camera (205) can see a widest point of the vehicle (100) located behind the equipment holder (105).

4. System (200) according to any one of the preceding claims, furthermore comprising
- a third camera (215), which is accommodated in the housing (240) such that it can see a region located laterally in front of the vehicle (100).

5. System (200) according to any one of the preceding claims, furthermore comprising
- a signal light (225),
- a lighting unit,
- a cleaning unit (220) for one of the cameras (205, 210, 215),
- a temperature sensor and/or
- a light sensor (810) and/or a sensor for an ambient brightness.

6. System (200) according to any one of the preceding claims, wherein the equipment holder (105) is configured to be attached in a region of the vehicle (100) which extends behind and above an axle of a front wheel and in front of a bulkhead (125) of the vehicle (100).

7. System (200) according to any one of the preceding claims, wherein the equipment holder (105) is configured to be attached to vehicles (100) of various vehicle types (100).

8. System (200) according to Claim 7, wherein the mounting plate (235) and the housing (240) are attached to one of the fastening plates (230).

9. System (200) according to any one of the preceding claims, wherein a first housing (240) is provided for attachment to a first mounting plate (235) and a second housing (240) is provided for attachment to a second mounting plate (235).

10. Vehicle (100) comprising a system (200) having an equipment holder (105) according to any one of the preceding claims.

## Revendications

1. Système (200), comprenant :
- une première plaque de fixation (230) destinée à être montée sur un véhicule (100) d'un premier type de véhicule associé ;
- une deuxième plaque de fixation (230) destinée à être montée sur un véhicule (100) d'un deuxième type de véhicule associé ;
- les plaques de fixation (230) étant chacune adaptées pour être montées sur un côté extérieur droit ou gauche du véhicule (100) ;
- une plaque de support (235) avec une première caméra (205) et une deuxième caméra (210) ; et
- un boîtier (240) destiné à être monté sur l'une des plaques de fixation (230) de telle sorte que la première caméra (205) puisse voir une zone située latéralement derrière le véhicule (100) et que la deuxième caméra (210) puisse voir une zone située latéralement au véhicule (100).

2. Système (200) selon la revendication 1, comprenant un support d'équipement (105) pour un véhicule (100), le support d'équipement (105) comprenant
- la première caméra (205),
- la deuxième caméra (210), et
- le boîtier (240) pour recevoir la première caméra (205) et la deuxième caméra (210)
le boîtier (240) étant adapté pour être monté sur un côté extérieur droit ou gauche d'un véhicule (100).

3. Système (200) selon la revendication 1 ou 2, dans lequel le boîtier (240) est adapté pour espacer latéralement la première caméra (205) du véhicule (100) de telle sorte que la première caméra (205) puisse voir un emplacement le plus large du véhicule (100) situé derrière le support d'équipement (105).

4. Système (200) selon l'une quelconque des revendications précédentes, comprenant en outre
- une troisième caméra (215), qui est reçue dans le boîtier (240) de manière à pouvoir voir une zone située latéralement devant le véhicule (100).

5. Système (200) selon l'une quelconque des revendications précédentes, comprenant en outre
- une lampe de signalisation (225),
- un dispositif d'éclairage,
- un dispositif de nettoyage (220) pour l'une des caméras (205, 210, 215),
- un capteur de température et/ou
- un capteur de lumière (810) et/ou un capteur pour une luminosité ambiante.

6. Système (200) selon l'une quelconque des revendications précédentes, dans lequel le support d'équipement (105) est adapté pour être monté dans une zone du véhicule (100) qui s'étend derrière et au-dessus d'un essieu d'une roue avant et devant un tablier (125) du véhicule (100).

7. Système (200) selon l'une quelconque des revendications précédentes, dans lequel le support d'équipement (105) est adapté pour être monté sur des véhicules (100) de différents types de véhicules.

8. Système (200) selon la revendication 7, dans lequel la plaque de support (235) et le boîtier (240) sont montés sur l'une des plaques de fixation (230).

9. Système (200) selon l'une quelconque des revendications précédentes, dans lequel un premier boîtier (240) est prévu pour être monté sur une première plaque de support (235) et un deuxième boîtier (240) est prévu pour être monté sur une deuxième plaque de support (235).

10. Véhicule (100), comprenant un système (200) avec un support d'équipement (105) selon l'une quelconque des revendications précédentes.
